# EUROPÄISCHE PATENTSCHRIFT

(11) **EP 1 519 777 B1**
(45) Veröffentlichungstag und Bekanntmachung des Hinweises auf die Patenterteilung: **30.08.2006**
(21) Anmeldenummer: 03740445.6
(22) Anmeldetag: 09.07.2003
(51) Int. Cl.: B01D 27/08

(54) **FILTERKARTUSCHE**
FILTER CARTRIDGE
CARTOUCHE FILTRANTE

(30) Priorität: 10.07.2002 DE 10231095
(43) Veröffentlichungstag der Anmeldung: 06.04.2005
(73) Patentinhaber: Brita GmbH, 65232 Taunusstein (DE)
(72) Erfinder: REDER, Ernst, 55278 Hahnheim (DE); MOHR, Ingo, 65510 Hünstetten (DE); WEBER, Klaus-Peter, 63628 Bad Soden Salmünster (DE); LINDLOFF, Jörg, 65232 Taunusstein (DE)
(74) Vertreter: Fuchs Mehler Weiss & Fritzsche
(86) Internationale Anmeldenummer: PCT/EP2003/007402
(87) Internationale Veröffentlichungsnummer: WO 2004/007047

(56) Entgegenhaltungen:
- GB-A- 1 259 154
- US-A- 5 249 701
- US-A- 5 830 348
- US-B1- 6 319 415
- PATENT ABSTRACTS OF JAPAN vol. 1998, no. 09, 31. Juli 1998 (1998-07-31) & JP 10 085730 A (HITACHI LTD;HITACHI TAGA TECHNOL KK), 7. April 1998 (1998-04-07)

## Beschreibung

Die Erfindung betrifft eine Filterkartusche mit einem Filtermaterial enthaltenden Kartuschenbehälter mit Boden- und Umfangswand und mit einem den Kartuschenbehälter dauerhaft verschließenden Deckel, der einen Deckelboden und eine entlang seines Umfangs daran angeformte streifenförmige Seitenwand aufweist, die an der Innenseite des Kartuschenbehälters befestigt ist.

Filterkartuschen sind Bestandteile von Filtervorrichtungen, insbesondere von Wasserfiltern, und werden als Austauschkomponente in einen druckfesten Außenbehälter eingesetzt. Die Außenkontur der Filterkartusche entspricht im wesentlichen der Innenkontur des Außenbehälters, so dass dieser den durch das zu filtrierende Fluid auf die Kartuschenwände wirkenden Druck aufnimmt. Die Boden- und Umfangswand der Filterkartusche braucht daher nicht druckstabil ausgebildet zu sein. Anders verhält es sich jedoch mit dem Kartuschendeckel, da zwischen dem Kartuschendeckel und dem Deckel des Außenbehälters in der Regel ein Zwischenraum vorhanden ist. Dieser Zwischenraum kommt unter Umständen dadurch zustande, dass der Deckel in den Kartuschenbehälter eingesetzt und an der Innenseite an der Wand des Kartuschenbehälters befestigt wird, wobei die umlaufende Seitenwand des Kartuschendeckels gegenüber der Bodenwand des Kartuschendeckels nach oben vorsteht. Diese Ausgestaltung des Kartuschendeckels erfordert nicht nur eine druckstabile Ausführung des Deckels, sondern auch eine druckstabile Befestigung des Deckels am Kartuschenbehälter, um Leckagen zu vermeiden.

Der Deckelboden bildet mit der am Umfang angeformten, sich nach oben erstreckenden Seitenwand in etwa einen rechten Winkel, wie dies beispielsweise aus der DE 199 58 649.7 bekannt ist. Durch den Innendruck wirken nach oben gerichtete Kräfte auf den Deckelboden, der dadurch entsprechend nach oben gewölbt und gedehnt wird. Dies hat zur Folge, dass auf die Seitenwand im Bereich der Verbindungsstelle mit dem Deckelboden radial nach innen gerichtete Kräfte wirken, die zur Ablösung der Seitenwand und zur Rissbildung im Verbindungsbereich führen.

Druckstöße, die während des Betriebs der Filtervorrichtung in großer Anzahl auf die Kartuschenwand und den Kartuschendeckel einwirken, können auf Dauer zu Undichtigkeiten führen, so dass die Filterkartusche insgesamt ausgetauscht werden muss.

Bisher gibt es noch keine Lösungsansätze, um diese Probleme zu beheben.

Aus dem Gebrauchsmuster DE 297 15 504 U1 ist ein Gehäuse für ein Luftfilterelement bekannt, das eine bei wechselnden Druckverhältnissen ausreichende Stabilität gewährleisten soll. Zum Stand der Technik wird in dieser Vorveröffentlichung auf Luftfiltergehäuse hingewiesen, deren oberer Teil eine nach außen gerichtete Wölbung aufweist. Im Gegensatz dazu wird in dieser Schrift vorgeschlagen, die Wölbung nach innen zu richten, so dass die sich aufgrund von Druckschwankungen ergebenden Luftpulsationen durch den relativ steifen Randbereich gedämpft werden. Wie dieses Deckelteil am Gehäuse befestigt ist oder ob dieses Deckelteil integraler Bestandteil des Gehäuses ist, wird nicht mitgeteilt.

Die EP 0 861 682 B1 beschreibt einen Deckel für Filtergehäuse, der beim Abnehmen vom Filtergehäuse weniger Saugwirkung entfaltet und beim Aufsetzen auf das Filtergehäuse weniger Luft in den Filtergehäuseinnenraum einbringt. Es handelt sich hierbei um einen abnehmbaren Deckel, der einen insgesamt leicht gewölbten Boden ohne gekrümmten Randabschnitt und eine entlang seines Umfangs daran angeformte mantelförmige Seitenwand aufweist, die sich in Richtung einer Längsachse beiderseits des Bodens erstreckt und dem Deckel die Form eines nach unten offenen. Bechers gibt. An ihrem unteren Bereich ist an der Seitenwand ein Außengewinde vorgesehen, das mit dem korrespondierenden Innengewinde des Filtergehäuses zusamnienwirkt und so Befestigungsmittel bildet, mit denen der Deckel im Gehäuse festlegbar ist. Oberhalb des Außengewindes ist in der Außenseite der Seitenwand eine umlaufende Ringnut ausgespart, in der ein als Dichtmittel dienender O-Ring angeordnet ist. Ferner ist an einer Stelle des Deckels unterhalb der Ringnut eine die Seitenwand radial zur Längsachse durchquerende Öffnung angeordnet, wodurch die Innenseiten des becherförmigen Deckels mit seiner Außenseite kommunizierend verbunden ist.

Dieser Deckel ist aus relativ dickwandigem Material gefertigt, wobei der Deckelboden insgesamt leicht nach außen gewölbt ist, um dem Deckel ausreichende Stabilität zu geben, wenn das Filtergehäuse im Betrieb mit Überdruck beaufschlagt wird. Da die Seitenwand des Deckels ohnehin nur über das Außengewinde mit der Behälterwand verbunden ist, ist eine gewisse Elastizität der Seitenwand sichergestellt, die wegen der zusätzlichen Dichtmittel am oberen Abschnitt der Seitenwand nicht zu Leckagen führt.

Die US 5,830,348 beschreibt einen Treibstofffilter und einen Druckregler, die in einem gemeinsamen Gehäuse mit Umfangswand angeordnet sind. Das Gehäuse ist mit einem Deckel mit einem Auslassanschluss für den Treibstoff versehen. Der Deckelboden weist Wölbungen auf, die in Richtung Umfangswand in einen nach innen gekrümmten Randabschnitt übergehen, der über einen weiteren nach außen gewölbten Abschnitt in einen Seitenwandabschnitt übergeht, der am Gehäuse befestigt ist.

Aufgabe der Erfindung ist es, die Lebensdauer von Filterkartuschen mit dauerhaft befestigtem Deckel zu verlängern.

Diese Aufgabe wird mit einer Filterkartusche gelöst, die dadurch gekennzeichnet ist, dass der Deckelboden in Richtung Umfangswand über einen nach innen gekrümmten Randabschnitt in die Seitenwand übergeht, wobei sich der gekrümmte Randabschnitt und die streifenförmige Seitenwand im Anformbereich in einem sich nach innen spitz auslaufenden gemeinsamen Wandabschnitt vereinigen.

Die Erfindung geht von der Erkenntnis aus, dass die durch den Innendruck auf den Deckelboden wirkenden Kräfte F_{D} im Bereich des gemeinsamen Wandabschnitt eine Zugkraft F_{Z} bewirken, die auf Grund der Krümmung des Randabschnitts eine große Kraftkomponente parallel zur Seitenwand aufweist und allenfalls eine geringe nach innen gerichtete Kraftkomponente senkrecht zur Seitenwand besitzt. Dies bedeutet, dass auch der Befestigungsbereich der Seitenwand mit der Umfangswand lediglich auf Zug längs der Seitenwand und der Umfangswand beansprucht wird, wodurch die Gefahr eines Scherbruchs am unteren Ende des Befestigungsbereichs minimiert wird.

Ein weiterer Vorteil des gekrümmten Randabschnitts besteht darin, dass die vom Innendruck auf den Deckel ausgeübten Kräfte im Randbereich nicht nur abgeschwächt, sondern zur Erzeugung einer Dichtkraft genutzt werden können. Dadurch, dass die Seitenwand und der gekrümmte Randabschnitt des Deckelbodens einen im Innern der Filterkartusche gemeinsamen Wandabschnitt bilden, ist die durch den Innendruck auf den gemeinsamen Wandabschnitt wirkende Kraftkomponente F radial nach außen gerichtet, so dass der gemeinsame Wandabschnitt gegen die Umfangswand des Kartuschenbehälters gedrückt wird. Hierbei ist es von Vorteil, wenn der gemeinsame Wandabschnitt den unteren Wandabschnitt der Seitenwand bildet.

Insgesamt wird die Belastung im kritischen Bereich der Umfangswand am unteren Ende des Befestigungsbereichs deutlich herabgesetzt, so dass Leckagen in diesem Bereich wirksam vermieden und die Lebensdauer der Filterkartusche hauptsächlich über den Verbrauch des Filtermaterials limitiert wird.

Vorzugsweise schließt sich die Seitenwand tangential am gekrümmten Randabschnitt an. Die Seitenwand ist vorteilhafterweise am gekrümmten Randabschnitt angeformt.

Durch die tangentiale Ausrichtung wird die nach innen gerichtete, auf die Seitenwand und auf die Umfangswand wirkende Kraftkomponente der Zugkraft weiter verringert. An der Außenseite des Deckels wird im Randbereich ein keilförmiger Ringraum gebildet. Es hat sich gezeigt, dass es ausreicht, wenn sich der gekrümmte Wandabschnitt bis zum inneren Ende der streifenförmigen Seitenwand erstreckt.

Es hat sich ferner herausgestellt, dass die Kräfteverteilung umso günstiger ist, je größer der Krümmungsradius des gekrümmten Randabschnitts gewählt wird, wobei die Obergrenze durch die Abmessung des Kartuschenbehälters begrenzt wird. Vorzugsweise weist der gekrümmte Randabschnitt einen mittleren Krümmungsradius R auf, für den gilt R≥3xS, insbesondere R≥5xS, wobei S die Wandstärke der Umfangswand bezeichnet.

Vorzugsweise erstreckt sich der gekrümmte Randabschnitt über einen Winkel α von 80° bis 100°. α bezeichnet den Winkel, den der Krümmungsradius R überstreicht. Der gekrümmte Randabschnitt besitzt an einem Ende im Bereich des gemeinsamen Wandabschnitts einen im wesentlichen vertikalen Abschnitt und geht am anderen Ende in einen im wesentlichen horizontalen Deckelbodenabschnitt über. Der Winkelbereich α von 80° bis 100° trägt dem Neigungswinkel der Umfangswand bezüglich der Bodenwand des Kartuschenbehälters Rechnung. Wenn sich der Kartuschenbehälter beispielsweise konisch nach oben erweitert, was die bevorzugte Ausführung darstellt, liegt der Winkel α vorzugsweise im Bereich von 90° bis 100°.

Vorteilhafterweise weist die Seitenwand einen oberen Wandabschnitt auf, der sich vom gemeinsamen Wandabschnitt nach oben mindestens bis zur Höhe des Deckelbodens erstreckt. Die Auflagefläche der streifenförmigen Seitenwand wird dadurch einerseits vergrößert und andererseits wird dadurch eine Anlagefläche für einen Stützring geschaffen, der auf dem Deckel angeordnet sein kann. Darüber hinaus dient dieser obere Wandabschnitt dazu, den Deckel mittels eines Greifwerkzeugs beim Einsetzen in die Kartusche und Befestigen an der Kartuschenwand zu ergreifen und zu halten.

Durch das Vorsehen eines Stützrings, der zwischen Kartuschendeckel und dem Deckel des Außenbehälters angeordnet ist, kann der Kartuschendeckel somit dünnwandiger ausgeführt sein, weit der auf die Innenseite des Kartuschendeckels ausgeübte Druck über den Stützring im wesentlichen an den Deckel des Außenbehälters weitergegeben wird. Da der Stützring wiederverwendbar ist, der Deckel aber mit der Filterkartusche entsorgt werden muss, können Kosten beim Deckelmaterial eingespart werden.

Die Bodenkontur des Stützrings ist vorzugsweise im wesentlichen komplementär zur Außenkontur des Deckels ausgebildet, so dass der Deckel bei Druckbeanspruchung vollflächig am Stützring anliegen kann.

Im drucklosen Zustand füllt der Stützring den keilförmigen Ringraum nicht vollständig aus. Vorteilhafterweise ist zwischen dem Stützring und mindestens dem an den gemeinsamen Wandabschnitt angrenzenden Abschnitt des gekrümmten Randabschnitts ein spaltförmiger Zwischenraum vorhanden. Dieser spattförmige Zwischenraum kann sich bis zum horizontalen Ende des gekrümmten Randabschnittes erstrecken. Der Begriff im wesentlichen komplementär ist daher unter Berücksichtigung dieses spaltförmigen Zwischenraums zu verstehen.

Das Vorsehen eines solchen Zwischenraums ist von Vorteil, weil anderenfalls bei Druckstößen die Außenfläche des Deckels an der Unterseite des Stützrings reiben würde und somit der Deckel auf Dauer beschädigt wird. Im Randbereich des Deckels, d.h. im Bereich des keilförmigen Ringraums würde dies zu einer nachteiligen Kerbwirkung führen. Aufgrund der großen Drücke kann das Deckelmaterial in den Bereich der Fließgrenze gelangen. Für die hierbei unter Umständen auftretende plastische Verformung wird somit ein entsprechender Freiraum zur Verfügung gestellt, in den das Material ausweichen kann. Dies bedeutet, dass die vollflächige Anlage des Deckels an der Unterseite des Stützrings nur dann erreicht wird, wenn extreme Drücke auftreten.

Die Verbindung des Deckels mit der Umfangswand des Kartuschenbehälters kann beispielsweise durch Verkleben oder Verschweißen hergestellt werden. Vorzugsweise wird jedoch das Laserverschweißen eingesetzt, weil mit größerer Genauigkeit der gewünschte Abschnitt der Seitenwand mit der Umfangswand verschweißt werden kann. Hierbei wird mindestens ein Abschnitt des gemeinsamen Wandabschnittes mit der Umfangswand des Kartuschenbehälters laserverschweißt. Es hat sich gezeigt, dass nicht die gesamte Breite der Seitenwand mit der Umfangswand des Kartuschenbehälters verschweißt sein muss, um eine ausreichende Stabilität zu erzielen. Vorteilhaft ist es, wenn sich der verschweißte Bereich bis zum unteren Ende des gemeinsamen Wandabschnittes erstreckt.

Für das Laserverschweißen ist das Material des Kartuschenbehälters für Laserlicht transparent und das Material der Seitenwand des Deckels für Laserlicht absorbierend ausgeführt. Hierbei reicht es aus, wenn vom Kartuschendeckel lediglich das Material der Seitenwand für Laserlicht absorbierend ist.

Beispielhafte Ausführungsformen der Erfindung werden nachfolgend anhand der Zeichnungen näher erläutert.

Es zeigen:
- Fig. 1: einen Schnitt durch eine Filterkartusche in perspektivischer Darstellung,
- Fig. 2a, b: vergrößerte Darstellungen der Einzelheit X,
- Fig.3: einen Schnitt durch den oberen Bereich der Filterkartusche mit Stützring, und
- Fig. 4: eine vergrößerte Darstellung der Einzelheit Y in Fig. 3.

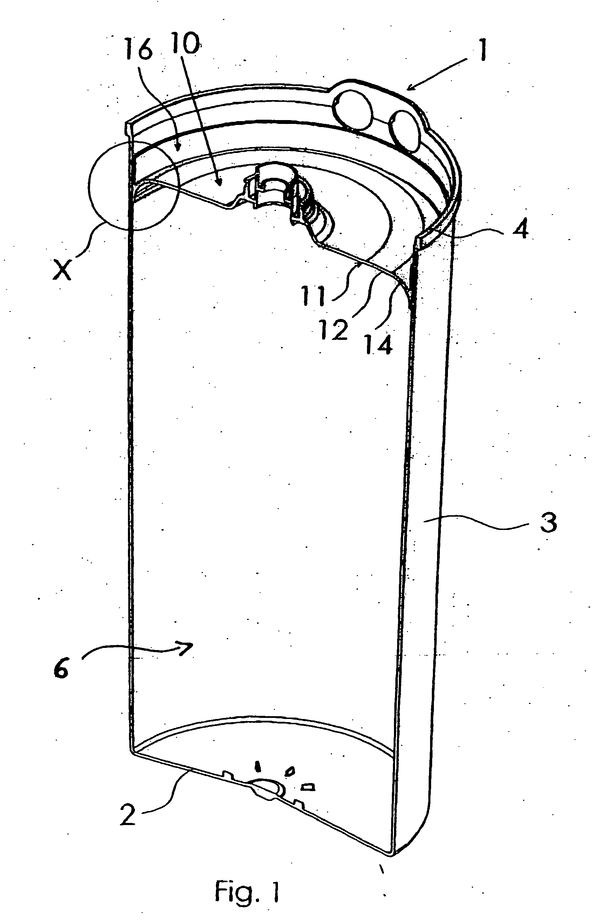

In der Fig. 1 ist eine Filterkartusche 1 mit einem Kartuschenbehälter 6 mit Bodenwand 2, Umfangswand 3 und Öffnungsrand 4 im Vertikalschnitt dargestellt. Auf die Darstellung des Filtermaterials im Innern der Filterkartusche wurde verzichtet. Die Umfangswand 3 ist in dieser Ausführungsform konisch ausgeführt. Eine zylindrische Umfangswand ist auch möglich.

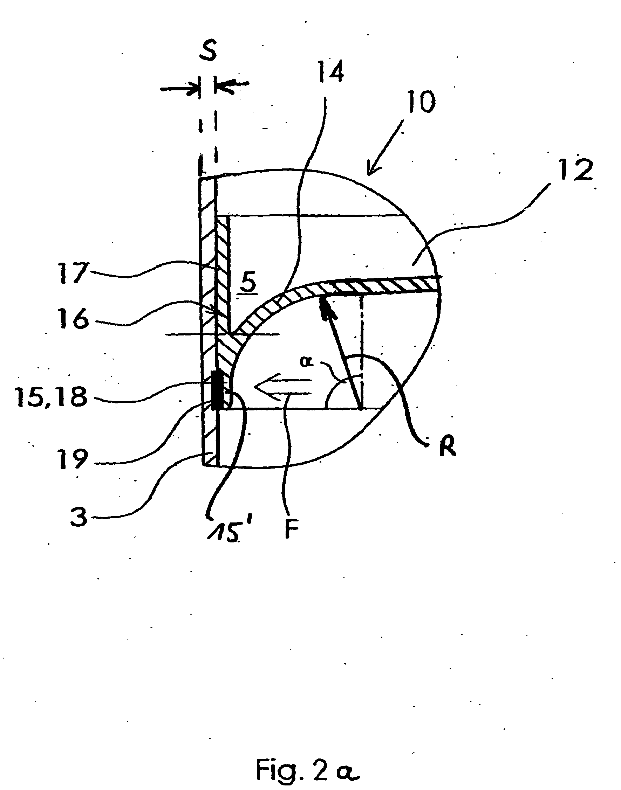

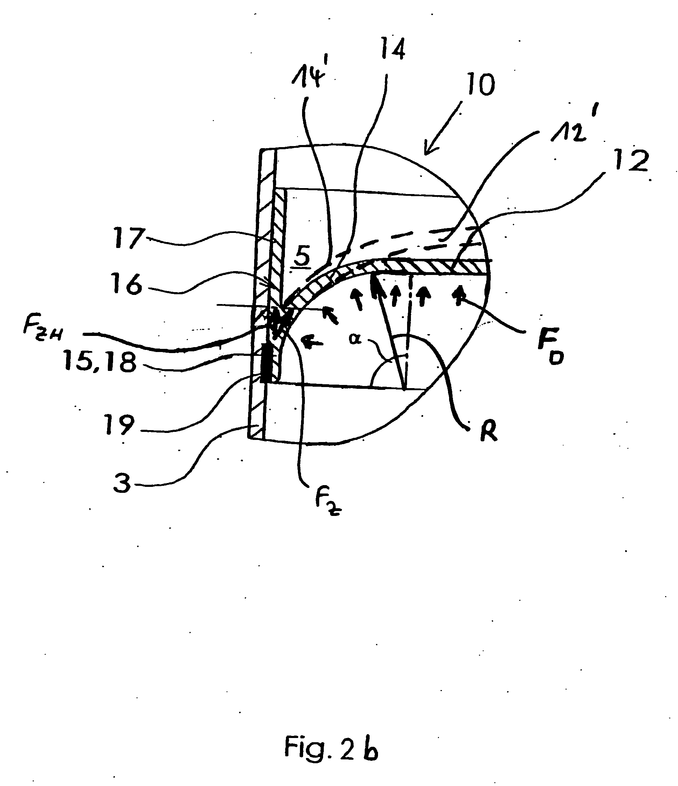

Im Innern des Kartuschenbehälters ist der Kartuschendeckel 10 beabstandet zum Öffnungsrand 4 eingesetzt. Der Kartuschendeckel 10 weist einen Deckelboden 11 auf, der einen bis auf den zentralen Bereich im wesentlichen horizontalen Mittelteil 12 und einen gekrümmten Randabschnitt 14 aufweist, was nachfolgend im Zusammenhang mit den Figuren 2a, b näher erläutert wird.

In der Fig. 2a ist die Einzelheit X vergrößert dargestellt. Es ist zu sehen, dass der horizontale Mittelteil 12 in Richtung auf die Umfangswand 3 in einen gekrümmten Randabschnitt 14 übergeht, der sich in den Innenraum der Filterkartusche erstreckt und sich mit seinen vertikalen Abschnitt 15' im gemeinsamen Wandabschnitt 15 mit der Seitenwand 16 vereinigt. Die Seitenwand 16 weist einen oberen Seitenwandabschnitt 17 und einen unteren Seitenwandabschnitt 18 auf, wobei der untere Seitenwandabschnitt 18 mit dem gemeinsamen Wandabschnitt 15 identisch ist. Dieser gemeinsame Wandabschnitt 15 läuft nach unten spitz zu.

Der gekrümmte Wandabschnitt 14 ist derart stark gekrümmt, dass er in vertikaler Richtung ausläuft, d. h. die Seitenwand 16 ist tangential an den gekrümmten Randabschnitt 14 angeformt. Die Seitenwand 16 erstreckt sich nahezu parallel zur Umfangswand 3.

Der gekrümmte Randabschnitt 14 wird durch den Krümmungsradius R charakterisiert, der im hier gezeigten Beispiel etwa 7xS beträgt, wobei S die Wandstärke der Umfangswand 3 bezeichnet. Der Winkel α bezeichnet den Bereich, den der Krümmungsradius R überstreicht, wobei R auch ein mittleren Krümmungsradius sein kann. Der gekrümmte Randabschnitt 14 erstreckt sich über einen Winkel α von ca. 90°.

Die Umfangswand 3 kann konisch ausgebildet sein und bildet mit der Bodenwand einen stumpfen Winkel (nicht dargestellt).

Der obere Wandabschnitt 17 erstreckt sich bis über den horizontalen Mittelteil 12 nach oben, wobei zwischen dem oberen Seitenwandabschnitt 17 und dem gekrümmten Randabschnitt 14 ein im Querschnitt keilförmiger Ringraum 5 gebildet wird. Der keilförmige Ringraum 5 weist einen spitzen Winkel, vorzugsweise von 40° - 50° auf.

Der gemeinsame Wandabschnitt 15 ist im Bereich 19 mit der Umfangswand 3 verschweißt, insbesondere laserverschweißt. Der Durchmesser des Deckels ist vorzugsweise mit Übermaß gefertigt, damit der Wandabschnitt 15 beim Verschweißen zusätzlich an die Umfangswand 3 angedrückt wird. Diese Vorpressung ist insbesondere für das Laserschweißen von Vorteil, um eine homogene Schweißnaht erzeugen zu können. Dieser Bereich 19 erstreckt sich von der unteren Spitze des gemeinsamen Wandabschnittes 15 nach oben, wobei es ausreicht, dass sich dieser Schweißbereich 19 nicht über die gesamte Breite des unteren Seitenwandabschnittes 18 erstreckt.

Die durch den Innendruck erzeugte Kraft ist beispielhaft durch den Pfeil F dargestellt. Es ist zu sehen, dass der Innendruck auf den gemeinsamen Wandabschnitt 15 drückt und somit insbesondere im Schweißabschnitt 19 eine zusätzliche Dichtkraft ausübt.

Die Fig. 2b entspricht der Fig. 2a, wobei zusätzlich der durch die auf die Innenseite wirkenden Kräfte F_{D} gewölbte Deckel gestrichelt dargestellt ist. Mittelteil 12 und gekrümmter Randabschnitt 14 werden nach oben gedrückt und nehmen die Position 12', 14' ein, wodurch Zugkräfte F_{Z} entstehen, die im gemeinsamen Wandabschnitt 15 ihre Hauptkomponente F_{ZH} parallel zur Seitenwand 16 besitzen. Dadurch wirken nur geringe nach innen gerichtete Kräfte auf den Schweißabschnitt 19, was dazu führt, dass am unteren Ende der Schweißnaht in dem kritischen Bereich der durch die Schweißung vorgeschädigten Umfangswand 3 bei Druckbeaufschlagung verringerte Scherkräfte auftreten.

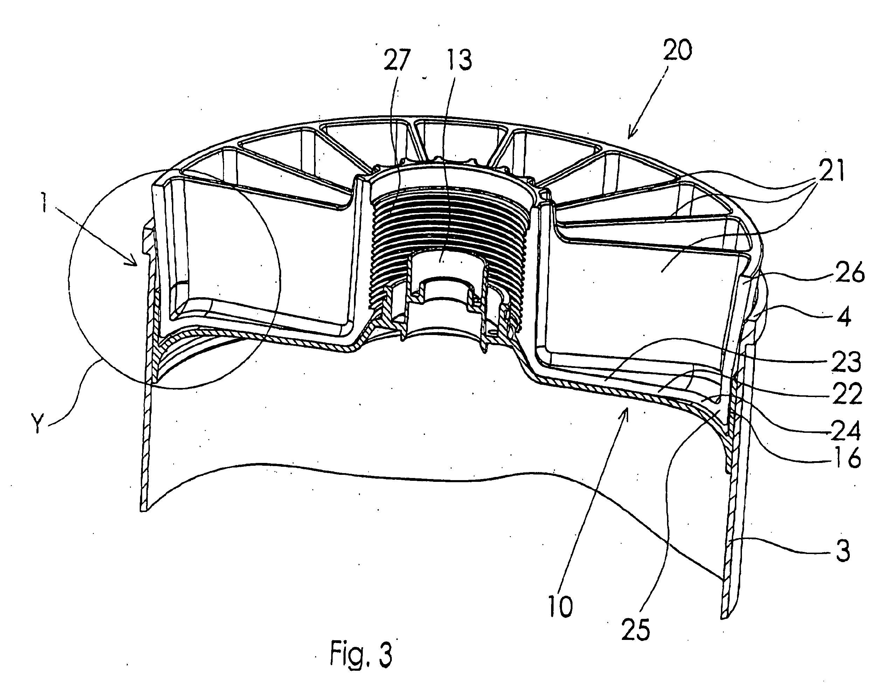

In der Fig. 3 ist die in den Fign. 1 und 2 erläuterte Filterkartusche mit einem Stützring 20 dargestellt. Der Deckel 10 ist vollständig eingezeichnet und besitzt mittig Anschlussrohre 13. Dementsprechend besitzt der Stützring 20 ebenfalls in seinem Zentrum eine Ringöffnung 27, so dass diese Anschlussrohre 13 von oben frei zugänglich sind.

Der Stützring 20 besitzt radiale Stützrippen 21, die im unteren Bereich durch einen gemeinsamen Stützringboden 22 und im Außenumfangsbereich durch eine gemeinsame Stützringwand 26 miteinander verbunden sind. Die Kontur des Stützringbodens 22 ist nahezu komplementär zur Außenkontur des Deckels 10 ausgeführt, wobei der Stützring 20 auch mit seiner Seitenwand 26 an der Seitenwand 16 anliegt.

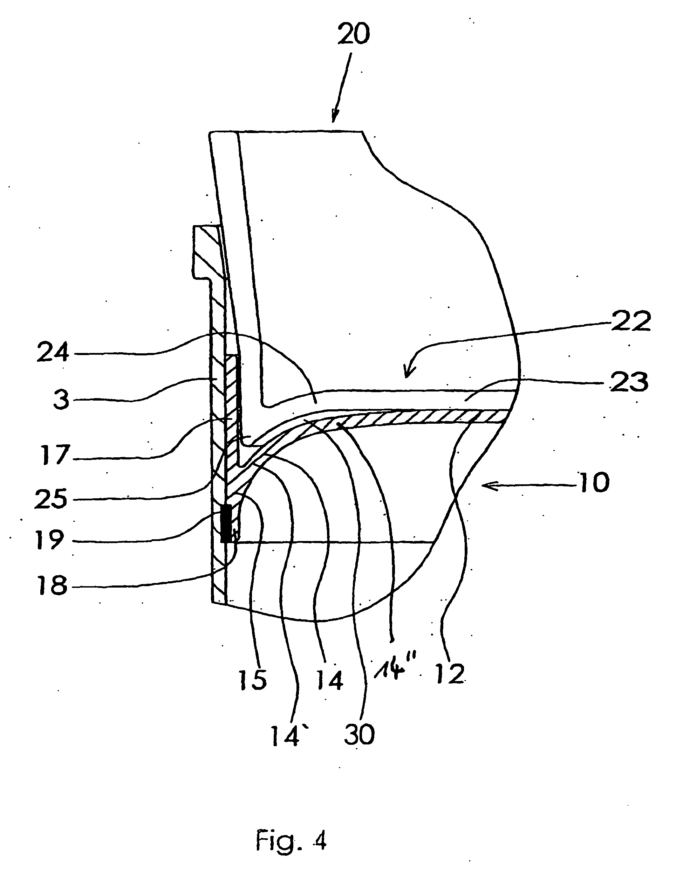

In der Fig. 4 ist eine vergrößerte Darstellung der Einzelheit Y zu sehen. In dem Bereich des keilförmigen Ringraumes oberhalb des gekrümmten Randabschnittes 14, insbesondere oberhalb des Abschnitts 14" des gekrümmten Randabschnitts 14 des Deckels 10 wird ein spaltförmiger Ringraum 30 gebildet. Dies wird dadurch erreicht, dass der Spitzrand 25 des auslaufenden gekrümmten Bodenabschnittes 24 des Stützringbodens 22 sich nicht vollständig in den Ringraum 5 erstreckt und der gekrümmte Abschnitt 24 des Stützringbodens 22 einen im Vergleich zum gekrümmten Randabschnitt 14 geringeren Krümmungsradius aufweist. Dieser unterschiedliche Krümmungsradius führt dazu, dass im horizontalen Abschnitt 23 des Stützringbodens 22 dieser am horizontalen Mittelteil 12 des Deckelbodens anliegt.

### Bezugszeichen

- 1: Filterkartusche
- 2: Bodenwand
- 3: Umfangswand
- 4: Öffnungsrand
- 5: keilförmiger Ringraum
- 6: Kartuschenbehälter
- 10: Deckel
- 11: Deckelboden
- 12: horizontales Mittelteil
- 12': horizontales Mittelteil
- 13: Anschlussrohre
- 14: gekrümmter Randabschnitt
- 14': gekrümmter Randabschnitt
- 14": Abschnitt des gekrümmten Randabschnitts
- 15: gemeinsamer Wandabschnitt
- 15': vertikaler Abschnitt
- 16: Seitenwand
- 17: oberer Seitenwandabschnitt
- 18: unterer Seitenwandabschnitt
- 19: Schweißabschnitt
- 20: Stützring
- 21: radiale Stützrippe
- 22: Stützringboden
- 23: horizontaler Abschnitt
- 24: gekrümmter Abschnitt
- 25: Spitzrand
- 26: Stützringwand
- 27: Ringöffnung
- 30: spaltförmiger Zwischenraum

## Patentansprüche

1. Filterkartusche (1) mit einem Filtermaterial enthaltenden Kartuschenbehälter (6) mit Bodenwand (2) und Umfangswand (3) und mit einem den Kartuschenbehälter (6) dauerhaft verschließenden Deckel (10), der einen Deckelboden (11) und eine entlang seines Umfangs daran angeformte, streifenförmige Seitenwand (16) aufweist, die an der Innenseite der Umfangswand (3) befestigt ist, **dadurch gekennzeichnet,**
**dass** der Deckelboden (11) in Richtung Umfangswand (3) über einen nach innen gekrümmten Randabschnitt (14) in die Seitenwand (16) übergeht, wobei sich der gekrümmte Randabschnitt (14) und die streifenförmige Seitenwand (16) im Anformbereich in einem nach innen spitz auslaufenden gemeinsamen Wandabschnitt (15) vereinigen.

2. Filterkartusche nach Anspruch 1, **dadurch gekennzeichnet, dass** sich die Seitenwand (16) tangential am gekrümmten Randabschnitt (14) anschließt.

3. Filterkartusche nach Anspruch 1 oder 2, **dadurch gekennzeichnet, dass** der gemeinsame Wandabschnitt (15) den unteren Wandabschnitt (18) der Seitenwand (16) bildet.

4. Filterkartusche nach einem der Ansprüche 1 bis 3, **dadurch gekennzeichnet, dass** sich der gekrümmte Randabschnitt (14) bis zum inneren Ende der streifenförmigen Seitenwand (16) erstreckt.

5. Filterkartusche nach einem der Ansprüche 1 bis 4, **dadurch gekennzeichnet, dass** der gekrümmte Randabschnitt (14) einen mittleren Krümmungsradius R aufweist, für den gilt R≥5xS, wobei S die Wandstärke der Umfangswand (3) des Kartuschenbehälters (6) bezeichnet.

6. Filterkartusche nach einem der Ansprüche 1 bis 5, **dadurch gekennzeichnet, dass** sich der gekrümmte Randabschnitt (14) über einen Winkel α von 80° bis 100° erstreckt.

7. Filterkartusche nach einem der Ansprüche 1 bis 6, **dadurch gekennzeichnet, dass** die Seitenwand (16) einen oberen Wandabschnitt (17) aufweist, der sich vom gemeinsamen Wandabschnitt (15) nach oben mindestens bis zur Höhe des Deckelbodens (11) erstreckt.

8. Filterkartusche nach Anspruch 7, **dadurch gekennzeichnet, dass** der obere Wandabschnitt (17) der Seitenwand (16) und der gekrümmte Randabschnitt (14) an ihrer Außenseite einen im Querschnitt keilförmigen Ringraum (5) begrenzen.

9. Filterkartusche nach einem der Ansprüche 1 bis 8, **dadurch gekennzeichnet, dass** auf dem Deckel (10) ein Stützring (20) angeordnet ist.

10. Filterkartusche nach 9, **dadurch gekennzeichnet, dass** mindestens die Bodenkontur des Stützrings (20) im wesentlichen komplementär zur Außenkontur des Deckels (10) ausgebildet ist.

11. Filterkartusche nach einem der Ansprüche 9 oder 10, **dadurch gekennzeichnet, dass** der Stützring (20) den keilförmigen Ringraum (5) nicht vollständig ausfüllt.

12. Filterkartusche nach einem der Ansprüche 9 bis 11, **dadurch gekennzeichnet, dass** zwischen dem Stützring (20) und mindestens dem an den gemeinsamen Wandabschnitt (15) angrenzenden Abschnitt (14') des gekrümmten Randabschnitts (14) ein spaltförmiger Zwischenraum (30) vorhanden ist.

13. Filterkartusche nach einem der Ansprüche 1 bis 12, **dadurch gekennzeichnet, dass** mindestens ein Abschnitt (19) des gemeinsamen Wandabschnittes (15) mit der Umfangswand (3) laserverschweißt ist.

14. Filterkartusche nach Anspruch 13, **dadurch gekennzeichnet, dass** der Abschnitt (19) mit der Umfangswand (3) verklebt oder spiegelgeschweißt ist.

15. Filterkartusche nach einem der Ansprüche 1 bis 14, **dadurch gekennzeichnet, dass** das Material des Kartuschenbehälters (6) für Laserlicht transparent und mindestens das Material der Seitenwand (16) des Deckels (10) für Laserlicht absorbierend ist.

## Claims

1. Filter cartridge (1) having a cartridge container (6) which contains a filter material, and having a base wall (2) and peripheral wall (3) and having a lid (10) which permanently closes the cartridge container (6) and which has a lid base (11) and a strip-like side wall (16) which is formed thereon along the periphery thereof and which is fixed to the inner side of the peripheral wall (3), **characterised in that**
the lid base (11) merges with the side wall (16) in the direction of the peripheral wall (3) via an edge portion (14) which is curved inwards, the curved edge portion (14) and the strip-like side wall (16) joining together in a common wall portion (15) which tapers acutely inwards.

2. Filter cartridge according to claim 1, **characterised in that** the side wall (16) adjoins the curved edge portion (14) in a tangential manner.

3. Filter cartridge according to claim 1 or 2, **characterised in that** the common wall portion (15) forms the lower wall portion (18) of the side wall (16).

4. Filter cartridge according to any one of claims 1 to 3, **characterised in that** the curved edge portion (14) extends as far as the inner end of the strip-like side wall (16).

5. Filter cartridge according to any one of claims 1 to 4, **characterised in that** the curved edge portion (14) has a mean radius of curvature R, for which R≥5XS, S denoting the wall thickness of the peripheral wall (3) of the cartridge container (6).

6. Filter cartridge according to any one of claims 1 to 5, **characterised in that** the curved edge portion (14) extends over an angle α of from 80° to 100°.

7. Filter cartridge according to any one of claims 1 to 6, **characterised in that** the side wall (16) has an upper wall portion (17) which extends from the common wall portion (15) upwards at least up to the height of the lid base (11).

8. Filter cartridge according to claim 7, **characterised in that** the upper wall portion (17) of the side wall (16) and the curved edge portion (14) delimit at the outer side thereof an annular space (5) which has a wedge-shaped cross-section.

9. Filter cartridge according to any one of claims 1 to 8, **characterised in that** a supporting ring (20) is arranged on the lid (10).

10. Filter cartridge according to claim 9, **characterised in that** at least the base contour of the supporting ring (20) is constructed in a substantially complementary manner relative to the outer contour of the lid (10).

11. Filter cartridge according to either claim 9 or 10, **characterised in that** the supporting ring (20) does not completely fill the wedge-like annular space (5).

12. Filter cartridge according to any one of claims 9 to 11, **characterised in that** a slit-like intermediate space (30) is provided between the supporting ring (20) and at least the portion (14') of the curved edge portion (14) that adjoins the common wall portion (15).

13. Filter cartridge according to any one of claims 1 to 12, **characterised in that** at least a portion (19) of the common wall portion (15) is laser welded to the peripheral wall (3).

14. Filter cartridge according to claim 13, **characterised in that** the portion (19) is adhesively-bonded or welded to the peripheral wall (3) with heat reflectors.

15. Filter cartridge according to any one of claims 1 to 14, **characterised in that** the material of the cartridge container (6) is transparent to laser light and at least the material of the side wall (16) of the lid (10) is absorbent relative to laser light.

## Revendications

1. Cartouche filtrante (1) avec un boîtier de cartouche (6) contenant une matière filtrante, avec une paroi de fond (2) et une paroi périphérique (3) et avec un couvercle (10) fermant durablement le boîtier de cartouche (6), qui présente un fond de couvercle (11) et une paroi latérale en forme de bande (16), façonnée sur celui-ci le long de sa périphérie, laquelle est fixée sur la face intérieure de la paroi périphérique (3), **caractérisée en ce que** le fond de couvercle (11) se prolonge dans la paroi latérale (16) par une partie de bord (14) courbée vers l'intérieur en direction de la paroi périphérique (3), dans laquelle la partie de bord courbe (14) et la paroi latérale en forme de bande (16) se réunissent dans la zone de façonnage en une partie de paroi commune (15) se terminant en pointe vers l'intérieur.

2. Cartouche filtrante selon la revendication 1, **caractérisée en ce que** la paroi latérale (16) se raccorde tangentiellement à la partie de bord courbe (14).

3. Cartouche filtrante selon la revendication 1 ou 2, **caractérisée en ce que** la partie de paroi commune (15) forme la partie de paroi inférieure (18) de la paroi latérale (16).

4. Cartouche filtrante selon l'une quelconque des revendications 1 à 3, **caractérisée en ce que** la partie de bord courbe (14) s'étend jusqu'à l'extrémité intérieure de la paroi latérale en forme de bande (16).

5. Cartouche filtrante selon l'une quelconque des revendications 1 à 4, **caractérisée en ce que** la partie de bord courbe (14) présente un rayon de courbure moyen R, pour lequel on a R ≥ 5 x S, dans laquelle S désigne l'épaisseur de paroi de la paroi périphérique (3) du boîtier de cartouche (6).

6. Cartouche filtrante selon l'une quelconque des revendications 1 à 5, **caractérisée en ce que** la partie de bord courbe (14) s'étend sur un angle α de 80° à 100°.

7. Cartouche filtrante selon l'une quelconque des revendications 1 à 6, **caractérisée en ce que** la paroi latérale (16) comprend une partie de paroi supérieure (17), qui s'étend de la partie de paroi commune (15) vers le haut au moins jusqu'à la hauteur du fond de couvercle (11).

8. Cartouche filtrante selon la revendication 7, **caractérisée en ce que** la partie de paroi supérieure (17) de la paroi latérale (16) et la partie de bord courbe (14) limitent sur leur face extérieure un espace annulaire (5) ayant une section transversale en forme de coin.

9. Cartouche filtrante selon l'une quelconque des revendications 1 à 8, **caractérisée en ce qu'**une bague de support (20) est disposée sur le couvercle (10).

10. Cartouche filtrante selon la revendication 9, **caractérisée en ce que** le contour du fond de la bague de support (20) est sensiblement complémentaire au contour extérieur du couvercle (10).

11. Cartouche filtrante selon la revendication 9 ou 10, **caractérisée en ce que** la bague de support (20) ne remplit pas entièrement l'espace annulaire en forme de coin (5).

12. Cartouche filtrante selon l'une quelconque des revendications 9 à 11, **caractérisée en ce qu'**elle comporte un espace intermédiaire (30) en forme de fente entre la bague de support (20) et au moins la partie (14') de la partie de bord courbe (14) adjacente à la partie de paroi commune (15).

13. Cartouche filtrante selon l'une quelconque des revendications 1 à 12, **caractérisée en ce qu'**au moins une partie (19) de la partie de paroi commune (15) est soudée au laser à la paroi périphérique (3).

14. Cartouche filtrante selon la revendication 13, **caractérisée en ce que** la partie (19) est collée ou soudée au miroir avec la paroi périphérique (3).

15. Cartouche filtrante selon l'une quelconque des revendications 1 à 14, **caractérisée en ce que** la matière du boîtier de cartouche (6) est transparente à la lumière laser et au moins la matière de la paroi latérale (16) du couvercle (10) est absorbante pour la lumière laser.
